# EUROPÄISCHE PATENTSCHRIFT

(11) **EP 2 597 757 B1**
(45) Veröffentlichungstag und Bekanntmachung des Hinweises auf die Patenterteilung: **08.01.2014**
(21) Anmeldenummer: 11009321.8
(22) Anmeldetag: 24.11.2011
(51) Int. Cl.: H02K 3/47, H02K 5/128, H02K 3/44

(54) **Elektromotor für Hochtemperaturanwendungen**
Electric engine for high temperature applications
Moteur électrique pour applications haute température

(43) Veröffentlichungstag der Anmeldung: 29.05.2013
(73) Patentinhaber: Maxon Motor AG, 6072 Sachseln (CH)
(72) Erfinder: Phillips, Robin Dr., 6064 Kerns (CH); Stubicar, Kornelia, 6330 Cham (CH); Kuhn, Walter, 79211 Denzlingen (DE)
(74) Vertreter: Grünecker, Kinkeldey, Stockmair & Schwanhäusser

(56) Entgegenhaltungen:
- EP-A1- 1 833 142
- EP-A1- 2 135 567
- EP-A2- 0 193 929
- US-A1- 2010 308 683
- US-A1- 2011 012 468

## Beschreibung

Die vorliegende Erfindung betrifft einen Elektromotor für Hochtemperaturanwendungen nach dem Oberbegriff des unabhängigen Anspruchs 1. Ein derartiger Elektromotor umfasst einen Rotor und einen Stator mit einer hohlzylindrischen eisenlosen Statorwicklung aus Backlackdraht und mit einem weichmagnetischen Rückschluss, der die Statorwicklung umschließt. Die Statorwicklung ist durch eine radial innen an der Statorwicklung anliegende hohlzylindrische Stützhülse abgestützt.

Mögliche Anwendungen derartiger Elektromotoren, die hohen Temperaturen standhalten müssen, gibt es beispielsweise in den Bereichen Luft- und Raumfahrt, Fahrzeug- und Flugzeugbau, Rohstoffförderung und -verarbeitung, insbesondere in der Erdölindustrie für Versuchs- und Erkundungsbohrungen nach Erdöl und Erdgas, sowie in der Kraftwerkstechnik.

Aus dem Stand der Technik sind Elektromotoren für Hochtemperaturanwendungen bekannt, deren Statorwicklung nicht auf ein genutetes Blechpaket aufgewickelt, sondern als hohlzylindrische eisenlose Statorwicklung ausgeführt ist. Die Statorwicklung besteht dabei in der Regel aus mehreren in Umfangsrichtung sich überlagernden rautenförmigen Einzelwicklungen. Die Statorwicklung ist dabei aus Backlackdraht aufgewickelt, der nach seiner Aushärtung dafür Sorge trägt, dass die Statorwicklung formstabil bleibt. Bei hohen Temperaturen wird der Backlack allerdings weich, wodurch sich die Wicklung verformen kann. Da der Rotor der eingangs genannten Elektromotoren zumeist als Innenläufer konzipiert und unmittelbar von der Statorwicklung umschlossen ist, gefährdet diese Verformung die Einhaltung eines notwendigen Luftspalts zwischen dem Innenläufer und der Statorwicklung.

Ein Elektromotor mit einer hohlzylindrischen eisenlosen Statorwicklung aus Backlackdraht und mit einem weichmagnetischen Rückschluss ist aus US 6,489,697 B1 bekannt. Dort ist die hohlzylindrisch ausgeführte Statorwicklung von dem ebenfalls hohlzylindrischen weichmagnetischen Rückschluss umschlossen. Statorwicklung und Rückschluss bilden sozusagen eine Einheit, wobei zwischen der Statorwicklung und dem weichmagnetischen Rückschluss eine Isolierschicht besteht. Um eine Verformung der Statorwicklung zu verhindern, werden sowohl die Statorwicklung als auch der weichmagnetische Rückschluss durch einen Ölkreislauf gekühlt. Das Kühlmedium strömt in axialer Richtung sowohl am Innenumfang der Statorwicklung als auch am Außenumfang des Rückschlusses vorbei. Damit das Kühlmedium nicht mit dem Innenläufer des Motors in Kontakt tritt, ist zwischen der Statorwicklung und dem Innenläufer eine keramische Hülse angeordnet, die weder den Rotor noch die Statorwicklung berührt. Die hohlzylindrische Keramikhülse definiert sowohl den Luftspalt zum Innenläufer, als auch den hohlzylindrischen Strömungskanal des Kühlfluids zwischen der keramischen Hülse und der Statorwicklung.

Der aus US 6,489,697 B1 bekannte Elektromotor ist in seinem Aufbau relativ komplex und außerdem teuer in der Herstellung sowie im Betrieb. Aufgrund des aktiven Kühlsystems muss der Elektromotor in regelmäßigen Abständen gewartet werden.

Aus US 2010/0045121 A1 ist ein Elektromotor für Hochtemperaturanwendungen bekannt, dessen Stator ein genutetes Blechpaket umfasst, auf welches die Statorwicklung aufgewickelt ist. Die einzelnen Wicklungen der Statorwicklung sind mittels eines elektrisch isolierenden Klebers mit keramischem Binder miteinander verklebt. Eine hohlzylindrische eisenlose Statorwicklung ist nicht gezeigt. Einen ganz wesentlichen Anteil an der Stabilität der Statorwicklung übernimmt das genutete Blechpaket des Stators, auf welches die Statorwicklung aufgewickelt ist.

Ein Elektromotor mit einer hohlzylindrischen eisenlosen Statorwicklung, die durch eine innerhalb der hohlzylindrischen Statorwicklung angeordnete Stützhülse abgestützt ist, ist aus EP 2135567 A1 bekannt. Einen ähnlichen Elektromotor zeigt auch die EP 0193929 A2.

Die US 2010/0308683 A1 offenbart ein Verfahren zur Herstellung einer hohlzylindrischen Statorwicklung, bei dem die Statorwicklung auf einen Stützdorn und auf einen mit dem Stützdorn verbundenen Wicklungsträgerring aufgewickelt wird. Nach dem Abziehen der Statorwicklung von dem Stützdorn bleibt der Wicklungsträgerring mit der Statorwicklung verbunden.

Weitere Elektromotoren mit eisenloser Statorwicklung sind aus US 2011/0012468 A1 und aus EP 1833142 A1 bekannt.

Es ist Aufgabe der vorliegenden Erfindung, einen Elektromotor der gattungsgemäßen Art in Bezug auf die Stabilität der Statorwicklung zu verbessern, insbesondere dahingehend, dass der Elektromotor auch bei Temperaturen bis 550°C eingesetzt werden kann. Der Elektromotor soll dennoch einfach im Aufbau und günstig zu fertigen sein. Es ist dabei ferner Aufgabe der vorliegenden Erfindung, eine möglichst kompakte und stabile Anordnung des Stators zu erreichen.

Die Aufgabe wird gelöst durch die Merkmale des unabhängigen Anspruchs 1. Demnach liegt bei einem Elektromotor der gattungsgemäßen Art dann eine erfindungsgemäße Lösung der Aufgabe vor, wenn die Statorwicklung mehrphasig, vorzugsweise dreiphasig, ausgeführt ist, wobei der Stator einen an einer Stirnseite der Statorwicklung angeordneten Wicklungsträger aus einem keramischen Werkstoff und eine an den Wicklungsträger anschließende und zur Verschaltung der Phasenwicklungen vorgesehene Leiterplatte aus einem keramischen Werkstoff umfasst, wobei sich die Stützhülse über die gesamte Länge von Statorwicklung und Wicklungsträger erstreckt und in axialer Richtung formschlüssig an der Leiterplatte anliegt.

Durch den Wicklungsträger kann die Statorwicklung im Elektromotor exakt positioniert und gehalten werden. Die Erfindung ermöglicht eine besonders kompakte und stabile Anordnung zur Verschaltung der Phasenwicklungen. Der Elektromotor lässt sich zudem besonders einfach montieren.

Die Stützhülse verhindert, dass sich die Statorwicklung bei hohen Temperaturen derart verformt, dass Funktionalität und Sicherheit des Elektromotors gefährdet sind. Die Stützhülse trägt somit dafür Sorge, dass die hohlzylindrische Form der Statorwicklung auch bei höchsten Einsatztemperaturen aufrecht erhalten wird, selbst wenn der Backlack, mit dem die einzelnen Wicklungen der Statorwicklung miteinander verbacken sind und der bei niedrigen Temperaturen bereits die Formstabilität der Statorwicklung gewährleistet, bereits weich wird und die Form der Statorwicklung bereits nicht mehr stabil aufrecht erhalten kann. Die Erfindung stellt einen Elektromotor bereit, der auch bei sehr hohen Temperaturen bis zu 550°C oder sogar darüber hinaus eingesetzt werden kann. Dabei bietet die Erfindung gleichzeitig den Vorteil, dass der Elektromotor schnell, kostengünstig und einfach gefertigt werden kann und zudem keine aufwändigen Wartungsarbeiten notwendig werden.

Der weichmagnetische Rückschluss, der die Statorwicklung umschließt, liegt vorzugsweise formschlüssig an der Statorwicklung an, wodurch eine gute Wärmeabfuhr nach außen gewährleistet ist. Vorzugsweise umfasst der Elektromotor ferner ein Gehäuse, welches den weichmagnetischen Rückschluss ebenfalls unmittelbar umschließt, so dass das Gehäuse formschlüssig an dem Rückschluss anliegt. Auch hierdurch ist eine optimale Wärmeabfuhr der in der Statorwicklung generierten Abwärme gewährleistet. Es wird jedoch darauf hingewiesen, dass ein zusätzliches Gehäuse nicht unbedingt erforderlich ist, beispielsweise dann, wenn der weichmagnetische Rückschluss bereits das äußere Gehäuse des Elektromotors bildet.

Vorteilhafte Ausgestaltungen der vorliegenden Erfindung sind Gegenstand der Unteransprüche.

In einer bevorzugten Ausführungsform der vorliegenden Erfindung erstreckt sich die Stützhülse über die gesamte Länge der Statorwicklung. Dadurch wird eine optimale Abstützung der Statorwicklung erreicht, so dass die Statorwicklung auch bei sehr hohen Einsatztemperaturen ihre Form behält.

In einer weiteren besonders bevorzugten Ausführungsform der vorliegenden Erfindung besteht die Stützhülse aus einem keramischen Werkstoff. Keramische Werkstoffe bieten zum Einen den Vorteil, dass sie sehr stabil sind, wodurch die Stützhülse sehr dünnwandig ausgeführt werden kann. Es wird daher sehr wenig Bauraum für die erfindungsgemäß vorgesehene Stützhülse benötigt. Ferner bietet Keramik auch noch den Vorteil, dass der Stützhülse dann eine leicht wärmeisolierende Wirkung zukommt. Dadurch wird der Wärmeabtransport nach außen über den weichmagnetischen Rückschluss und das Gehäuse begünstigt. Gleichzeitig wird verhindert, dass sich die Bauteile innerhalb der Statorwicklung, also beispielsweise ein als Innenläufer ausgeführter Rotor, aufgrund der in der Statorwicklung entstehenden Abwärme, erwärmen. Keramische Werkstoffe sind darüber hinaus nicht magnetisch und nicht magnetisierbar, wodurch die Entstehung von Ummagnetisierungsverlusten in der Stützhülse verhindert wird. Eine Stützhülse aus keramischem Werkstoff lässt sich zudem sehr schnell und kostengünstig fertigen. Als besonders günstig im Hinblick auf die vorgenannten Zwecke hat sich Zirkoniumoxid als keramischer Werkstoff herausgestellt.

In einer weiteren ganz besonders bevorzugten Ausführungsform der vorliegenden Erfindung ist die Statorwicklung zusätzlich mit einer Vergussmasse überzogen. Die Vergussmasse verleiht der Statorwicklung zusätzliche Stabilität und verhindert, dass sich der Backlack bei sehr hohen Temperaturen verflüchtigt, also verdampft oder verflüssigt. Die Vergussmasse wird vorzugsweise zumindest auf den gesamten Außenmantel der Statorwicklung aufgebracht. Eine Verflüchtigung des Backlacks wird optimal verhindert, wenn die Statorwicklung sowohl außen als auch innen mit der Vergussmasse überzogen ist.

Weiter vorzugsweise ist vorgesehen, dass die Statorwicklung durch die Vergussmasse an der Stützhülse fixiert ist. Dadurch wird ein äußerst stabiler Zusammenhalt von Statorwicklung und Stützhülse erreicht, so dass die Form der Statorwicklung optimal durch die Stützhülse gewährleistet werden kann.

Weiter vorzugsweise ist die Vergussmasse ein keramischer Binder oder ein keramischer Kleber. Sofern ein keramischer Binder zum Einsatz kommt, entsteht die Fixierung der Statorwicklung an der Stützhülse durch Formschluss und/oder Kraftschluss. Mit einem keramischen Kleber wird die Fixierung mittels Stoffschluss erreicht. Sowohl keramische Binder als auch keramische Kleber sind bei höchsten Einsatztemperaturen auch über 550 °C absolut formstabil und können auch bei diesen Temperaturen eine Verflüchtigung des Backlacks verhindern. Ganz besonders geeignet sind keramische Binder oder keramische Kleber auf Oxidkeramikbasis.

In einer weiteren bevorzugten Ausführungsform der vorliegenden Erfindung besteht auch der Wicklungsträger aus Zirkoniumoxid.

In einer weiteren bevorzugten Ausführungsform der vorliegenden Erfindung ist der Rotor des Elektromotors als Innenläufer ausgeführt. Der für die Funktion des Elektromotors erforderliche Luftspalt zwischen Stator und Rotor kann dabei durch die Stützhülse aus Keramik über einen sehr großen Temperaturbereich absolut stabil eingehalten werden. Die Stützhülse verformt sich auch bei hohen Temperaturen nicht in nennenswertem Umfang und stützt dabei gleichzeitig die Statorwicklung.

Ein Ausführungsbeispiel der vorliegenden Erfindung wird im Folgenden anhand einer Zeichnung näher erläutert.

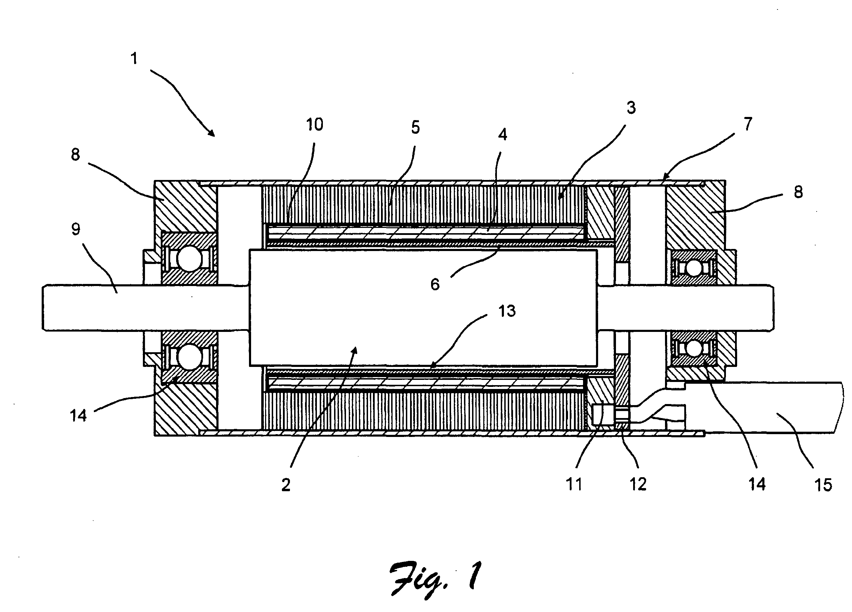

Die Figur zeigt einen erfindungsgemäßen Elektromotor im Längsschnitt.

Der Elektromotor 1 ist als Innenläufermotor konzipiert und umfaßt einen Rotor 2 und einen koaxial dazu angeordneten hohlzylindrischen Stator 3, der den Innenläuferrotor 2 umschließt. Der Innenläuferrotor 2 ist in der Darstellung nicht geschnitten gezeigt. Der genaue Aufbau des Rotors ist nicht weiter dargestellt. Der Rotor umfaßt einen Permanentmagneten oder mehrere über den Umfang verteilte Permanentmagnetsegmente. Das Gehäuse des erfindungsgemäßen Elektromotors, in dem sämtliche Teile des Elektromotors untergebracht sind, ist in der Darstellung mit dem Bezugszeichen 7 bezeichnet. Es besteht aus einer einfachen hohlzylindrischen Hülse, vorzugsweise aus Stahl. An beiden Enden ist jeweils ein Gehäusedeckel 8 vorgesehen, der das Gehäuse 7 in axialer Richtung abschließt. In beiden Gehäusedeckeln 8 befindet sich jeweils ein Kugellager 14 zur drehbaren Lagerung der Welle 9 des Innenläuferrotors 2.

Der Stator 3 des erfindungsgemäßen Elektromotors 1 besteht aus einer eisenlosen hohlzylindrischen Statorwicklung 4 und einem weichmagnetischen Außenrückschluss 5, bestehend aus einem Blechpaket. Der Außenrückschluss 5 ist ebenfalls hohlzylindrisch ausgeführt und umschließt die Statorwicklung 4, wobei der Außenrückschluss formschlüssig an der Statorwicklung 4 anliegt. Die hohlzylindrische Statorwicklung 4 ist aus einem Backlackdraht aufgewickelt. Der Backlack wird bei der Herstellung der Statorwicklung erwärmt und anschließend ausgehärtet, so dass er die Wicklung bei niedrigen Temperaturen formstabil zusammenhält. Um den Elektromotor für sehr hohe Einsatztemperaturen zu rüsten, ist die hohlzylindrische keramische Stützhülse 6 vorgesehen, die innerhalb der Statorwicklung 4 und koaxial zu dieser angeordnet ist, wobei die Statorwicklung 4 mit ihrem Innenumfang am Außenumfang der Stützhülse 6 anliegt. Die keramische Stützhülse 6 besteht aus Zirkoniumoxid, welches mit Yttrium stabilisiert ist. Die keramische Stützhülse 6 ist in ihrem Durchmesser so bemessen, dass zwischen dem Innenläufer 2 und der Keramikhülse 6 der für die Sicherstellung der Funktion des Elektromotors erforderliche Luftspalt 13 bestehen bleibt. Da die keramische Hülse 6 auch bei höchsten Einsatztemperaturen absolut formstabil bleibt, stellt sie zu jeder Zeit sicher, dass sich die Statorwicklung 4 nicht derart verformen kann, dass sie mit dem Innenläuferrotor 2 in Kontakt kommt. Der gezeigte erfindungsgemäße Elektromotor ist daher für Einsatztemperaturen bis zu 550°C geeignet.

Die Statorwicklung 4 ist zusätzlich vollständig mit einer Vergußmasse 10 überzogen, die aus einem keramischen Binder oder einem keramischen Kleber besteht. Die keramische Vergußmasse ist sowohl auf den Außenumfang als auch auf den Innenumfang der Statorwicklung 4 aufgebracht. Ihr kommen mehrere Funktionen zu. Zum Einen erhöht die keramische Vergußmasse die Stabilität der Statorwicklung 4, insbesondere bei hohen Temperaturen. Ferner ist die hohlzylindrische Statorwicklung 4 mittels der keramischen Vergußmasse an der hohlzylindrischen Stützhülse 6 fixiert. Schließlich trägt die keramische Vergußmasse auch dafür Sorge, dass die Statorwicklung 4 vollständig umkapselt ist, so dass der Backlack des Wicklungsdrahts auch bei hohen Temperaturen daran gehindert wird, sich zu verflüchtigen, z.B. durch Verdampfung oder Verflüssigung.

Die jeweils hohlzylindrisch ausgeführten Bauteile Statorwicklung 4, Außenrückschluss 5 und Gehäuse sind alle koaxial zueinander angeordnet und liegen jeweils formschlüssig aneinander an. Dies gewährleistet, dass die in der Statorwicklung 4 entstehende Abwärme optimal über den Außenrückschluss 5 und das Gehäuse 7 nach Außen abgeführt werden kann. Die keramische Stützhülse 6 und der zwischen Stützhülse 6 und Innenläuferrotor 2 befindliche Luftspalt 13 sorgen dafür, dass nach Innen zum Rotor 2 hin eine gewisse Isolationswirkung besteht, so dass der Innenläuferrotor wenig Wärmeeintrag von der Statorwicklung 4 erfährt.

Vom rechten stirnseitigen Ende der Statorwicklung 4 ist ein ringförmig ausgebildeter Wicklungsträger 11 angeordnet, mittels dem die Statorwicklung 4 im Gehäuse 7 des Elektromotors gehalten wird. Der Wicklungsträger 11 schließt axial an die Statorwicklung 4 an, wobei der Innenumfang des Wicklungsträgers 11 nach Innen nicht über den Innenumfang der Statorwicklung 4 hinausragt. Dadurch kann die Stützhülse 6 so ausgeführt werden, dass sie über die gesamte Länge der Statorwicklung und des daran anschließenden Wicklungsträgers 11 reicht. Die Stützhülse 6 grenzt damit sowohl die Statorwicklung 4 als auch den Wicklungsträger 11 gegenüber dem Innenläuferrotor 2 ab. Der Wicklungsträger 11 besteht ebenfalls aus einem keramischen Werkstoff, nämlich Zirkoniumoxid, welches mit Yttrium stabilisiert ist. An dem Wicklungsträger 11 schließt rechts noch die Leiterplatte 12 an, zu der die elektrischen Kontakte 15 des erfindungsgemäßen Elektromotors 1 führen. Da die Statorwicklung 4 dreiphasig ausgeführt ist, dient die Leiterplatte 12 zur individuellen Verschaltung der drei Phasen. Wie in der Darstellung zu erkennen ist, liegt die hohlzylindrische Stützhülse 6 mit ihrem rechten Stirnende formschlüssig an der Leiterplatte 12 an.

## Patentansprüche

1. Elektromotor (1) für Hochtemperaturanwendungen, umfassend einen Rotor (2) und einen Stator (3) mit einer hohlzylindrischen eisenlosen Statorwicklung (4) aus Backlackdraht und mit einem weichmagnetischen Rückschluss (5), der die Statorwicklung (4) umschließt, wobei die Statorwicklung (4) durch eine radial innen an der Statorwicklung (4) anliegende hohlzylindrische Stützhülse (6) abgestützt ist, **dadurch gekennzeichnet, dass** die Statorwicklung (4) mehrphasig, vorzugsweise dreiphasig, ausgeführt ist, wobei der Stator (3) einen an einer Stirnseite der Statorwicklung (4) angeordneten Wicklungsträger (11) aus einem keramischen Werkstoff und eine an den Wicklungsträger (11) anschließende und zur Verschaltung der Phasenwicklungen vorgesehene Leiterplatte (12) aus einem keramischen Werkstoff umfasst, wobei sich die Stützhülse (6) über die gesamte Länge von Statorwicklung (4) und Wicklungsträger (11) erstreckt und in axialer Richtung formschlüssig an der Leiterplatte (12) anliegt.

2. Elektromotor (1) nach Anspruch 1, **dadurch gekennzeichnet, dass** sich die Stützhülse über die gesamte Länge der Statorwicklung erstreckt.

3. Elektromotor (1) nach einem der Ansprüche 1 oder 2, **dadurch gekennzeichnet, dass** die Stützhülse aus einem keramischen Werkstoff, vorzugsweise aus Zirkoniumoxid, besteht.

4. Elektromotor (1) nach einem der Ansprüche 1 bis 3, **dadurch gekennzeichnet, dass** die Statorwicklung zusätzlich mit einer Vergussmasse (10) überzogen ist.

5. Elektromotor (1) nach Anspruch 4, **dadurch gekennzeichnet, dass** die Statorwicklung durch die Vergussmasse an der Stützhülse fixiert ist.

6. Elektromotor (1) nach einem der Ansprüche 4 oder 5, **dadurch gekennzeichnet, dass** die Vergussmasse ein keramischer Binder oder ein keramischer Kleber, vorzugsweise auf Oxidkeramik-Basis, ist.

7. Elektromotor (1) nach einem der Ansprüche 1 bis 6, **dadurch gekennzeichnet, dass** der Wicklungsträger aus Zirkoniumoxid besteht.

8. Elektromotor (1) nach einem der Ansprüche 1 bis 7, **dadurch gekennzeichnet, dass** der Rotor als Innenläufer ausgeführt ist.

## Claims

1. Electric motor (1) for high-temperature applications, comprising a rotor (2) and a stator (3) with a hollow-cylindrical, ironless stator winding (4) of a stoved-enamel wire and with a soft-magnetic return (5) enclosing the stator winding (4), wherein the stator winding (4) is supported by a hollow-cylindrical supporting sleeve (6) lying radially inside against the stator winding (4), **characterized in that** the stator winding (4) is of a polyphase, preferably a three-phase design, wherein the stator (3) furthermore comprises a winding support (11) of a ceramic material disposed at a front face of the stator winding (4) and a printed circuit board (12) of a ceramic material adjacent to the winding support (11) and provided for interconnecting the phase windings, wherein the supporting sleeve (6) extends over the complete length of the stator winding (4) and the winding support (11) and positively lies against the printed circuit board (12) in the axial direction.

2. Electric motor (1) according to claim 1, **characterized in that** the supporting sleeve extends over the complete length of the stator winding.

3. Electric motor (1) according to one of claims 1 or 2, **characterized in that** the supporting sleeve consists of a ceramic material, preferably of zirconium oxide.

4. Electric motor (1) according to one of claims 1 to 3, **characterized in that** the stator winding is additionally coated with a potting compound (10).

5. Electric motor (1) according to claim 4, **characterized in that** the stator winding is fixed to the supporting sleeve by the potting compound.

6. Electric motor (1) according to one of claims 4 or 5, **characterized in that** the potting compound is a ceramic binder or a ceramic adhesive, preferably on the basis of oxide ceramics.

7. Electric motor (1) according to one of claims 1 to 6, **characterized in that** the winding support consists of zirconium oxide.

8. Electric motor (1) according to one of claims 1 to 7, **characterized in that** the rotor is designed as internal rotor.

## Revendications

1. Moteur électrique (1) pour applications haute températures, comprenant un rotor (2) et un stator (3) avec un enroulement de stator (4), qui est cylindrique creux et exempt de fer, en fil thermo-adhérent, et avec un circuit de fermeture (5) magnétique doux, qui entoure l'enroulement de stator (4), l'enroulement de stator (4) étant supporté par un fourreau de support (6) cylindrique creux s'appuyant radialement à l'intérieur de l'enroulement de stator (4), **caractérisé en ce que** l'enroulement de stator (4) est d'une configuration à phases multiples, de préférence triphasée, **en ce que** le stator (3) comprend un support d'enroulement (11) en un matériau céramique, qui est agencé sur un côté frontal de l'enroulement de stator (4), et une plaque de circuit imprimé (12) en un matériau céramique, qui se raccorde au support d'enroulement (11) et est prévue pour la mise en circuit des enroulements de phase, et **en ce que** le fourreau de support (6) s'étend sur la totalité de la longueur de l'enroulement de stator (4) et du support d'enroulement (11), et, dans la direction axiale, s'appuie par complémentarité de formes sur la plaque de circuit imprimé (12).

2. Moteur électrique (1) selon la revendication 1, **caractérisé en ce que** le fourreau de support s'étend sur la totalité de la longueur de l'enroulement de stator.

3. Moteur électrique (1) selon la revendication 1 ou la revendication 2, **caractérisé en ce que** le fourreau de support est réalisé en un matériau céramique, de préférence en oxyde de zirconium.

4. Moteur électrique (1) selon l'une des revendications 1 à 3, **caractérisé en ce que** l'enroulement de stator est en outre enrobé par un composé d'enrobage à couler (10).

5. Moteur électrique (1) selon la revendication 4, **caractérisé en ce que** l'enroulement de stator est fixé au fourreau de support par le composé d'enrobage à couler.

6. Moteur électrique (1) selon l'une des revendications 4 ou 5, **caractérisé en ce que** le composé d'enrobage à couler est un liant céramique ou une colle céramique, de préférence à base de céramiques-oxydes.

7. Moteur électrique (1) selon l'une des revendications 1 à 6, **caractérisé en ce que** le support d'enroulement est en oxyde de zirconium.

8. Moteur électrique (1) selon l'une des revendications 1 à 7, **caractérisé en ce que** le rotor est réalisé en tant qu'induit tournant intérieur.
